# EUROPÄISCHE PATENTSCHRIFT

(11) **EP 1 424 521 B1**
(45) Veröffentlichungstag und Bekanntmachung des Hinweises auf die Patenterteilung: **30.08.2006**
(21) Anmeldenummer: 03024823.1
(22) Anmeldetag: 31.10.2003
(51) Int. Cl.: F16L 9/19, F16L 39/00

(54) **Rohrförmiges Fluidführungsteil**
Tubular fluid conduit
Conduit tubulaire pour fluides

(30) Priorität: 28.11.2002 DE 10255538
(43) Veröffentlichungstag der Anmeldung: 02.06.2004
(73) Patentinhaber: AUDI AG, 85045 Ingolstadt (DE)
(72) Erfinder: Fleischmann, Hans, 85134 Stammham (DE); Scholle, Tassilo, 85055 Ingolstadt (DE)
(74) Vertreter: Asch, Konrad

(56) Entgegenhaltungen:
- EP-A- 0 148 813
- EP-A- 0 207 015
- DE-A- 4 423 201
- FR-A- 2 501 823
- GB-A- 2 324 845
- US-A- 5 400 828

## Beschreibung

Die Erfindung betrifft ein Geschwindigkeits-Wechselgetriebe mit einem rohrförmigen Fluidführungsteil, das in der Rohrwand Kanäle zum axialen Führen eines Fluids von einem Bauteil zu einem anderen Bauteil aufweist.

Derartige Fluidführungsteile können z.B. bei Getriebesteuerungen zum Führen von Hydrauliköl entlang einer Getriebewelle'zu einem Verbraucher verwendet sein.

Aufgabe der Erfindung ist es, ein Geschwindigkeits-Wechselgetriebe der gattungsgemäßen Art vorzuschlagen, mit einem einfach aufgebauten und fertigungstechnisch günstig herstellbarem Fluidführungsteil.

Diese Aufgabe wird erfindungsgemäß mit den kennzeichnenden Merkmalen des Patentanspruches 1 gelöst. Vorteilhafte Weiterbildungen der Erfindung beschreiben die weiteren Patentansprüche.

Erfindungsgemäß wird vorgeschlagen, dass das Fluidführungsteil des Geschwindigkeits-Wechselgetriebes zumindest aus einem Innenrohr und einem dieses umgebenden Außenrohr besteht, wobei die Kanäle durch offene Nuten im Innenrohr und/oder Außenrohr gebildet sind, die in einen stirnseitigen Flansch und/oder in radiale Fluidführungsbohrungen münden. Das Fluidführungsteil ist somit aus zumindest zwei Einzelteilen gefertigt, die für sich gesehen einfach herstellbare Bauteile sind und die dann entsprechend fluiddicht zusammengesetzt werden.

Bevorzugt können dabei die offenen Nuten ausschließlich im Außenrohr ausgebildet sein, während das Innenrohr rotationssymmetrisch ausgeführt ist. Damit kann das Innenrohr baulich günstig relativ eng um z.B. eine Welle angeordnet werden und es können Kanäle beliebiger Gestaltung in das Außenrohr eingeformt sein, bevorzugt im Gießverfahren. Theoretisch ist jedoch auch eine umgekehrte Gestaltung mit einem rotationssymmetrischen Außenrohr möglich und ggf. zweckmäßig.

Ferner ist es vorteilhaft, wenn an der zumindest einen Stirnseite des Fluidführungsteils ein Flansch angeordnet ist, der fluiddicht mit dem Außenrohr und dem Innenrohr verbunden ist und der zumindest eine Ausnehmung für das Fluid aufweist. Über den zumindest einen Flansch kann das Fluidführungsteil z.B. mittels Schrauben mit dem Verbraucher oder einer Fluidzuführungsstelle verbunden sein und eine zweckmäßige, betriebssichere Anbindung sicherstellen.

Dabei kann der Flansch stirnseitig mit dem Außenrohr und dem Innenrohr dicht verschweißt sein, insbesondere unter Einsatz eines Strahlschweißverfahrens bzw. mittels Laserstrahlschweißen. Durch die örtlich hohe einbringbare Schweißenergie ist ein schnelles, verzugsarmes Schweißen mit fluiddichten Schweißnähten gegeben.

Des weiteren kann das Außenrohr mit mehreren, durch offene Nuten gebildeten Kanälen versehen sein, die mit separaten Zuführbohrungen und/oder Ausnehmungen im Flansch kommunizieren. Damit ist in baulich und fertigungstechnisch günstiger Weise eine separate Kanalführung für mehrfach Steuerungen hydraulischer oder pneumatischer Art möglich.

Das Außenrohr kann zudem zur Erzielung einer unproblematischen und steifen Flanschanbindung flanschseitig zumindest im Bereich der offenen Nuten radial nach außen erweitert sein.

Besonders zweckmäßig können zumindest zwei durch offene Nuten im Außenrohr gebildete Kanäle vorgesehen sein, die sternförmig um den Umfang verteilt in die Ausnehmungen im Flansch münden und dementsprechend die Steuerung oder Versorgung zumindest zweier voneinander getrennter Funktionen ermöglichen.

Eine einfach herstellbare und montageleichte Anbindung des Fluidführungsteils ist zudem erreichbar, wenn das rotationssymmetrische Innenrohr das Außenrohr zumindest an einer Stirnseite überragt und in einer Bohrung eines angrenzenden Bauteiles z.B. mittels eines Dichtringes oder Wellendichtringes abgedichtet ist.

Dabei kann besonders vorteilhaft ein in dem Außenrohr ausgeführter Kanal an der dem Flansch gegenüberliegenden Stirnseite offen ausgebildet sein und somit in einfacher Weise einen weiteren, separaten Kanal bilden, der z.B. mit einem in einem angrenzenden Bauteil ausgeführten Zuführkanal kommuniziert.

Bei mehreren, separaten Kanälen können in vorteilhafter Weise die Kanäle unterschiedlich lang ausgebildet sein, wobei die radialen Zuführbohrungen jeweils zwischen an dem Außenrohr angeordneten Dichtringen eingebracht sind.

Ist das Fluidführungsteil mit seinem stirnseitigen Flansch an ein sich drehendes Bauteil angebunden, so können die Dichtringe besonders zweckmäßig in Ringnuten des Außenrohres eingesetzte Kolbenringe oder ähnliche Dichtelemente sein. Das Außenrohr kann somit in ein mit einer zylindrischen Bohrung versehenes Gehäuse-Bauteil eingesetzt sein und sich relativ zu diesem drehen. Die radialen, mit den Kanälen im Fluidführungsteil kommunizierenden Fluidführungsbohrungen sind dabei entsprechend im Gehäuse-Bauteil angeordnet.

Eine besonders vorteilhafte Verwendung des erfindungsgemäßen Geschwindigkeits-Wechselgetriebes ist dadurch gekennzeichnet, dass das Fluidführungsteil mit einem rotierendem Teil eines Geschwindigkeits-Wechselgetriebes für Kraftfahrzeuge mittels des Flansches verbunden ist und dass das Außenrohr in eine zylindrische Aufnahme in einem benachbartem Gehäuse des Wechselgetriebes eingesteckt ist, wobei mit den radialen Zuführbohrungen und den Ausnehmungen im Flansch kommunizierende Zulaufund Ablaufkanäle vorgesehen sind.

Dabei kann das Fluidführungsteil ferner um eine Getriebewelle des Wechselgetriebes angeordnet sein und Hydrauliköl vom Gehäuse zum rotierenden Teil des Wechselgetriebes zum Steuern von Antriebsübersetzungen leiten.

Ein Ausführungsbeispiel der Erfindung ist im Folgenden mit weiteren Einzelheiten näher beschrieben.

Die anliegende schematische Zeichnung zeigt in:
- **Fig. 1**: einen Längsschnitt durch ein Fluidführungsteil mit einem Außenrohr, einem Innenrohr und einem stirnseitigem Flansch, sowie mit einem teilweise angedeutetem Antriebsteil und einem Gehäuse-Bauteil des Geschwindigkeits-Wechselgetriebes für Kraftfahrzeuge;
- **Fig. 2**: eine Ansicht X auf den stirnseitigen Flansch des Fluidführungsteils gemäß Fig. 1; und
- **Fig. 3**: eine weitere Ansicht Y des Fluidführungsteils auf dessen gegenüberliegende Stirnseite.

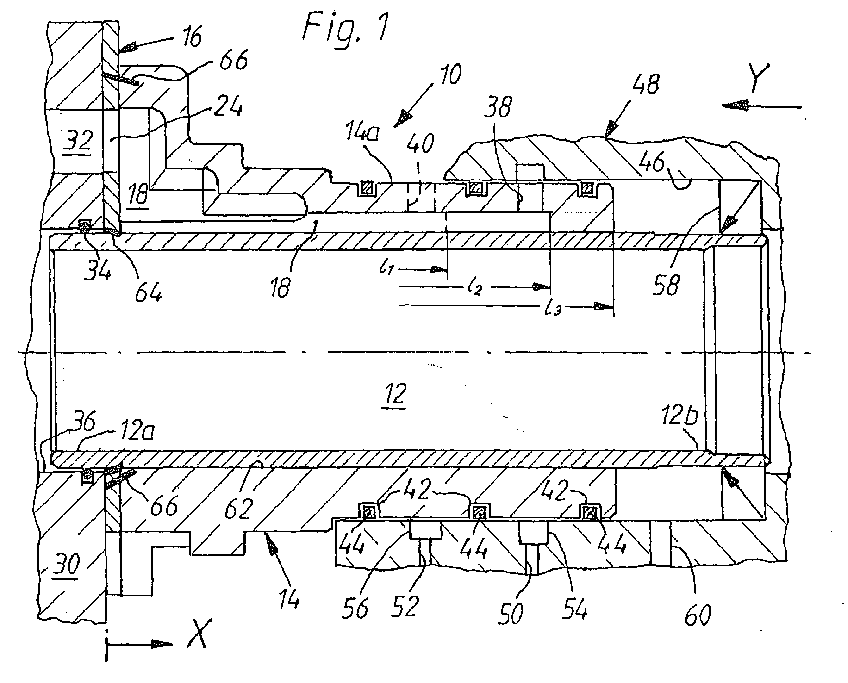

Das dargestellte Fluidführungsteil 10 setzt sich im wesentlichen aus einem rotationssymmetrischem Innenrohr 12, einem über dieses koaxial angeordnetem Außenrohr 14 und einem auf der Zeichnung **Fig. 1** links positioniertem Flansch 16 zusammen.

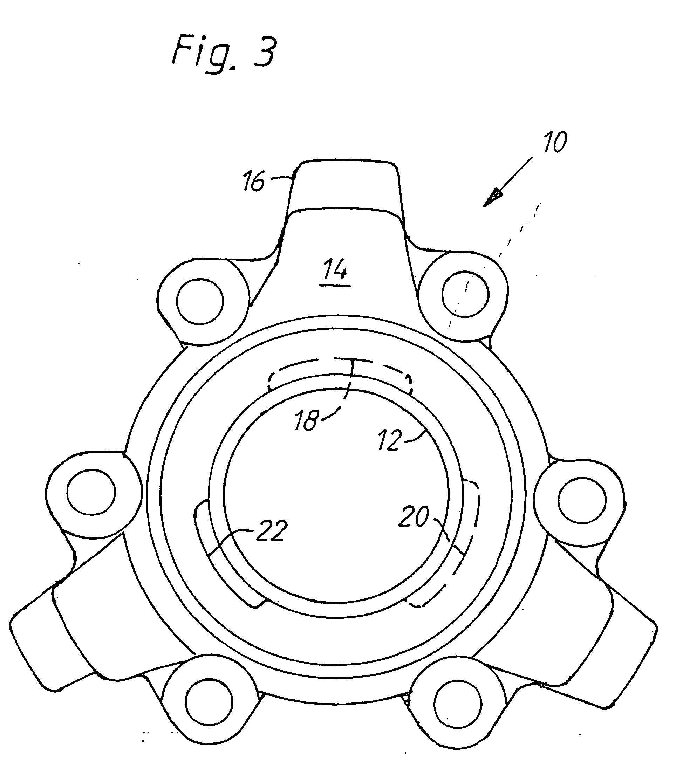

In dem im Feingussverfahren oder im Schmiedeverfahren aus einer schweißbaren Legierung gefertigten Außenrohr 14 sind drei Kanäle 18, 20, 22 (oder mehr möglich) eingeformt, die radial nach innen, dem Innenrohr 12 zugewandt, offen gestaltet sind (vgl. auch die **Fig. 3**).

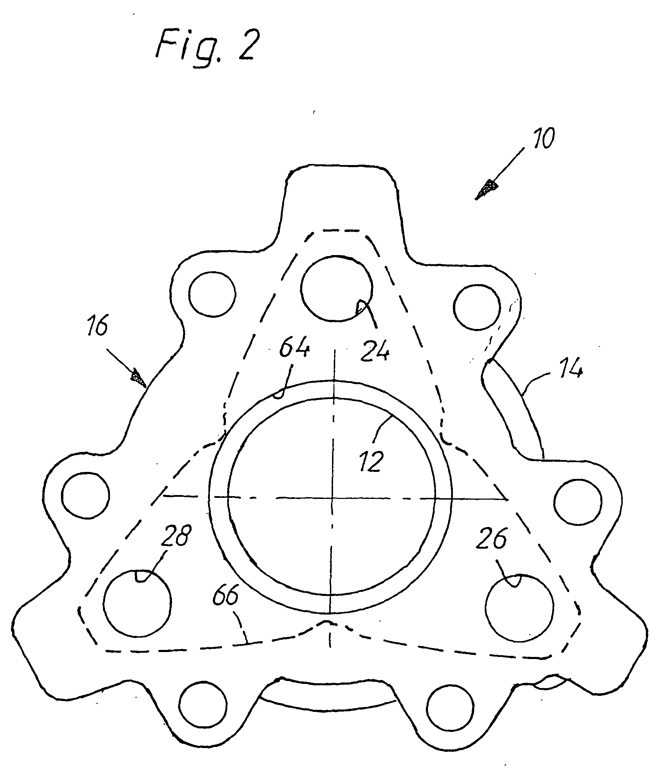

Die Kanäle 18, 20, 22 erweitern sich radial nach außen dem Flansch 16 zu, wie dies in der Schnittansicht **Fig. 1** anhand des Kanales 18 ersichtlich ist und münden in aus der **Fig. 2** ersichtliche Ausnehmungen, 24, 26, 28 des Flansches 16.

Der Flansch 16 ist mittels nicht dargestellter Schrauben mit einem Bauteil des nicht dargestellten Geschwindigkeits-Wechselgetriebes für ein Kraftfahrzeug verbunden, wobei die besagten Ausnehmungen 24, 26, 28 mit in dem Antriebsteil zur Steuerung von Antriebsübersetzungen mit drei Kanälen 32 (es ist in der Schnittansicht Fig. 1 nur ein Kanal 32 ersichtlich) kommunizieren. Eine nicht gezeigte Axialdichtung ist zwischen dem Flansch 16 und dem Antriebsteil 30 angeordnet: Das Innenrohr 12 ragt dabei mit einem Ringabschnitt 12a unter Zwischenschaltung einer Ringdichtung 34 in eine entsprechende Bohrung 36 des Antriebsteiles 30 ein.

Die drei Kanäle 18, 20, 22 sind sternförmig um das Außenrohr 14 angeordnet und weisen unterschiedliche Längen I₁, I₂, I₃ auf, wie dies aus der Fig. 1 verdeutlicht ist.

Dabei hat der ersichtliche Kanal 18 die jeweils von der korrespondierenden Ausnehmung 24, 26, 28 gerechnete Länge I₂, die bis zu einer ersten Zuführbohrung 38 im Außenrohr 14 ausgeführt ist.

Der nicht in der **Fig. 1** aufgrund der Schnittansicht ersichtliche Kanal 20 hat die Länge I₁ (vgl. die gestrichelten Linien) und reicht bis zu einer weiteren Zuführbohrung 40 im Außenrohr 14.

Der dritte Kanal 22 ist bis zur Stirnseite des Außenrohres 14 durchgehend offen gestaltet und hat somit die Länge I₃. Diese Kanäle können vorzugsweise im Querschnitt radial flach ausgebildet sein.

Der außen rotationssymmetrische Abschnitt 14a des Außenrohres 14 weist in Ringnuten 42 eingesetzte Kolbenringe 44 auf und ist in eine Bohrung 46 des Gehäuse-Bauteiles bzw. des Getriebegehäuses 48 des Geschwindigkeits-Wechselgetriebes eingesetzt.

Die Kolbenringe 44 liegen dabei jeweils beiderseits von gehäuseseitigen Zu- und/oder Abführkanälen 50, 52, die über gehäuseseitige Ringkanäle 54, 56 mit den Zuführbohrungen 38, 40 kommunizieren.

Ferner ragt ein gegenüberliegender Ringabschnitt 12b des Innenrohres 12 axial über das Außenrohr 14 hinaus und ist mittels eines in die Gehäusebohrung 46 eingesetzten Wellendichtringes 58 abgedichtet, wodurch der stirnseitig offene Kanal 22 ohne Leckage mit dem weiteren Zu- oder Abführkanal 60 kommunizieren kann.

Das Innenrohr 12 ist durch ein Stahlrohr mit entsprechendem Oberflächenfinish im Bereich des Wellendichtringes 58 gebildet und dicht in das Außenrohr 14 in dessen Innenbohrung 62 eingesetzt.

Ferner ist das Innenrohr 12 ringförmig durch Laserstrahlschweißen mit dem Flansch 16 und dem Außenrohr 14 verschweißt (Schweißnaht 64).

Mittels einer weiteren Schweißnaht (vgl. insbesondere **Fig.2**, gestrichelte Linie 66) ist der Flansch 16 sternförmig entsprechend der Außenkonfiguration des Außenrohres 14 im Flanschbereich durch Laserstrahlschweißung dicht verbunden.

Durch die drei voneinander wie beschrieben getrennten Kanäle 18, 20, 22 (vgl. auch **Fig. 3**) kann dem Antriebsteil 30 separat unter Druck stehendes Fluid bzw. Hydrauliköl zugeführt und/oder abgeführt werden. Das Innenrohr 12 des Fluidzuführungsteils 10 umschließt dabei eine nicht dargestellte Getriebewelle, die trieblich mit dem Antriebsteil 30 verbunden ist.

## Patentansprüche

1. Geschwindigkeits-Wechselgetriebes eines Kraftfahrzeuge mit einem rohrförmingen Fluidführungsteil, das in der Rohrwand Kanäle zum axialen Führen eines Fluids von einem Bauteil zu einem anderen Bauteil aufweist, **dadurch gekennzeichnet, dass** das rohrförmige Fluidführungsteil zumindest aus einem Innenrohr (12) und einem dieses umgebenden Außenrohr (14) besteht, wobei die Kanäle (18, 20, 22) durch offene Nuten im Innenrohr und/oder Außenrohr gebildet sind, die in einen stirnseitigen Flansch (16) und/oder in radiale Fluidführungsbohrungen (38, 40) münden.

2. Geschwindigkeits-Wechselgetriebe nach Anspruch 1, **dadurch gekennzeichnet, dass** die offenen Nuten ausschließlich im Außenrohr (14) ausgebildet sind und dass das Innenrohr (12) rotationssymmetrisch ausgeführt ist.

3. Geschwindigkeits-Wechselgetriebe nach Anspruch 1 oder 2, **dadurch gekennzeichnet, dass** an einer Stirnseite des Fluidfuhrungsteils ein Flansch (16) angeordnet ist, der fluiddicht mit dem Außenrohr (14) und dem Innenrohr (12) verbunden ist und der zumindest eine Ausnehmung (24, 26, 28) für das Fluid aufweist.

4. Geschwindigkeits-Wechselgetriebe nach einem der Ansprüche 1 bis 3, **dadurch gekennzeichnet, dass** der Flansch (16) stirnseitig mit dem Außenrohr (14) und dem Innenrohr (12) dicht verschweißt ist.

5. Geschwindigkeits-Wechselgetriebe nach Anspruch 4, **dadurch gekennzeichnet, dass** der Flansch (16) mit dem Außenrohr (14) und dem Innenrohr (12) durch Strahlschweißen, insbesondere durch Laserstrahlschweißen, verbunden ist.

6. Geschwindigkeits-Wechselgetriebe nach einem der Ansprüche 1 bis 5, **dadurch gekennzeichnet, dass** das Außenrohr (14) mit mehreren, durch offene Nuten gebildeten Kanälen (18, 20, 22) versehen ist, die mit separaten Zuführbohrungen (38, 40, 60) und/oder Ausnehmungen (24, 26, 28) im Flansch (16) kommunizieren.

7. Geschwindigkeits-Wechselgetriebe nach einem der Ansprüche 1 bis 6, **dadurch gekennzeichnet, dass** das Außenrohr (14) flanschseitig zumindest im Bereich der offenen Nuten radial nach außen erweitert ist.

8. Geschwindigkeits-Wechselgetriebe nach einem der Ansprüche 1 bis 7, **dadurch gekennzeichnet, dass** drei durch offene Nuten im Außenrohr (14) gebildete Kanäle (18, 20, 22) vorgesehen sind, die sternförmig um den Umfang verteilt in die Ausnehmungen (24, 26, 28) im Flansch (16) münden.

9. Geschwindigkeits-Wechselgetriebe nach einem der Ansprüche 1 bis 8, **dadurch gekennzeichnet, dass** das rotationssymmetrische Innenrohr (12) das Außenrohr (14) zumindest an einer Stirnseite überragt und in einer Bohrung (36, 46) eines angrenzenden Bauteiles (30, 48) abgedichtet ist.

10. Geschwindigkeits-Wechselgetriebe nach Anspruch 9, **dadurch gekennzeichnet, dass** ein in dem Außenrohr (14) ausgeführter Kanal (22) an der dem Flansch (16) gegenüberliegenden Stirnseite offen ausgebildet ist.

11. Geschwindigkeits-Wechselgetriebe nach einem der Ansprüche 1 bis 10, **dadurch gekennzeichnet, dass** das Außenrohr (14) im Gießverfahren oder im Schmiedeverfahren hergestellt ist.

12. Geschwindigkeits-Wechselgetriebe nach einem der Ansprüche 1 bis 11, **dadurch gekennzeichnet, dass** die Kanäle (18, 20, 22) unterschiedlich lang (l₁, l₂, l₃) ausgebildet sind und dass die radialen Zuführbohrungen (38, 40) jeweils zwischen an dem Außenrohr (14) angeordneten Dichtringen (44) eingebracht sind.

13. Geschwindigkeits-Wechselgetriebe nach Anspruch 12, **dadurch gekennzeichnet, dass** die Dichtringe in Ringnuten (42) des Außenrohres (14) eingesetzte Kolbenringe (44) oder ähnliche Dichtelemente sind.

14. Geschwindigkeits-Wechselgetriebe nach einem der Ansprüche 1 bis 13, **dadurch gekennzeichnet, dass** das Fluidführungsteil mit einem rotierendem Teil (30) des Geschwindigkeits-Wechselgetriebes für Kraftfahrzeuge mittels des Flansches (16) verbunden ist und dass das Außenrohr (14) in eine zylindrische Bohrung (46) in dem benachbartem Gehäuse (48) des Wechselgetriebes eingesteckt ist, wobei mit den radialen Zuführbohrungen (38, 40) und den Ausnehmungen (24, 26, 28) im Flansch (16) kommunizierende Zulauf- und Ablaufkanäle (32, 50, 52, 60) vorgesehen sind.

15. Geschwindigkeits-Wechselgetriebe nach Anspruch 14, **dadurch gekennzeichnet, dass** das Fluidführungsteil (10) um eine Getriebewelle des Wechselgetriebes angeordnet ist und Hydrauliköl vom Gehäuse (48) zum rotierenden Teil (30) des Wechselgetriebes zum Steuern von Antriebsübersetzungen leitet.

## Claims

1. Speed-change gearbox of a motor vehicle comprising a tubular fluid-conducting part provided in the tube wall with ducts for axially conducting a fluid from one component to another component, **characterised in that** the tubular fluid-conducting part consists at least of an inner tube (12) and an outer tube (14) surrounding the latter, the ducts (18, 20, 22) being formed by open grooves in the inner tube and/or outer tube leading to an end flange (16) and/or to radial fluid-conducting bores (38, 40).

2. Speed-change gearbox according to claim 1, **characterised in that** the open grooves are formed exclusively in the outer tube (14) and that the inner tube (12) is rotationally symmetrical.

3. Speed-change gearbox according to claim 1 or claim 2, **characterised in that** a flange (16) connected in a fluid-tight manner to the outer tube (14) and the inner tube (12) and having at least one recess (24, 26, 28) for the fluid is arranged on one end face of the fluid-conducting part.

4. Speed-change gearbox according to one of claims 1 to 3, **characterised in that** the flange (16) is tightly welded at its end face to the outer tube (14) and the inner tube (12).

5. Speed-change gearbox according to claim 4, **characterised in that** the flange (16) is connected to the outer tube (14) and the inner tube (12) by beam welding, in particular by laser beam welding.

6. Speed-change gearbox according to one of claims 1 to 5, **characterised in that** the outer tube (14) is provided with a plurality of ducts (18, 20, 22) formed by open grooves and communicating with separate feed bores (38, 40, 60) and/or recesses (24, 26, 28) in the flange (16).

7. Speed-change gearbox according to one of claims 1 to 6, **characterised in that** the outer tube (14) is expanded radially outwards at its flange end at least in the region of the open grooves.

8. Speed-change gearbox according to one of claims 1 to 7, **characterised by** three ducts (18, 20, 22) formed by open grooves in the outer tube (14), distributed in a star shape around the circumference and leading to the recesses (24, 26, 28) in the flange (16).

9. Speed-change gearbox according to one of claims 1 to 8, **characterised in that** the rotationally symmetrical inner tube (12) projects beyond the outer tube (14) at least at one end face and is sealed in a bore (36, 46) in an adjoining component (30,48).

10. Speed-change gearbox according to claim 9, **characterised in that** a duct (22) formed in the outer tube (14) is open at the end face situated opposite the flange (16).

11. Speed-change gearbox according to one of claims 1 to 10, **characterised in that** the outer tube (14) is produced by casting or by forging.

12. Speed-change gearbox according to one of claims 1 to 11, **characterised in that** the ducts (18, 20, 22) are of different lengths (l₁, l₂, l₃) and that the radial feed bores (38, 40) are each introduced between sealing rings (44) arranged on the outer tube (14).

13. Speed-change gearbox according to claim 12, **characterised in that** the sealing rings are piston rings (44) or similar sealing elements inserted into annular grooves (42) in the outer tube (14).

14. Speed-change gearbox according to one of claims 1 to 13, **characterised in that** the fluid-conducting part is connected to a rotating part (30) of the speed-change gearbox for motor vehicles by means of the flange (16) and that the outer tube (14) is inserted into a cylindrical bore (46) in the adjacent housing (48) of the speed-change gearbox, inlet and outlet ducts (32, 50, 52, 60) communicating with the radial feed bores (38, 40) and the recesses (24, 26, 28) in the flange (16) being provided.

15. Speed-change gearbox according to claim 14, **characterised in that** the fluid-conducting part (10) is arranged around a gear shaft of the speed-change gearbox and leads hydraulic oil from the housing (48) to the rotating part (30) of the speed-change gearbox in order to control gear ratios.

## Revendications

1. Boîte de vitesses d'un véhicule avec un conduit tubulaire pour fluide qui, dans la paroi du tube, présente des canaux pour l'acheminement axial d'un fluide d'un composant à un autre, **caractérisé en ce que** le conduit tubulaire pour fluide est constitué d'au moins un tube intérieur (12) et un tube extérieur (14) entourant celui-ci, les canaux (18, 20, 22) étant formés par des rainures ouvertes dans le tube intérieur et/ou le tube extérieur, qui débouchent sur une bride (16) frontale et/ou des orifices d'acheminement de fluide radiaux (38, 40).

2. Boîte de vitesses selon la revendication 1, **caractérisée en ce que**, les rainures ouvertes sont formées exclusivement dans le tube extérieur (14) et **en ce que** le tube intérieur (12) est à symétrie de rotation.

3. Boîte de vitesses selon la revendication 1 ou 2, **caractérisée en ce que** sur une face avant du conduit pour fluide est disposée une bride (16) qui est rattachée de façon étanche au tube extérieur (14) et au tube intérieur (12) et qui présente au moins un évidement (24, 26, 28) pour le fluide.

4. Boîte de vitesses selon l'une quelconque des revendications 1 à 3, **caractérisée en ce que** la bride (16) est soudée de façon étanche au tube extérieur (14) et au tube intérieur (12) au niveau de la face avant.

5. Boîte de vitesses selon la revendication 4, **caractérisée en ce que** la bride (16) est rattachée au tube extérieur (14) et au tube intérieur (12) par soudage par rayonnement, en particulier par soudage au laser.

6. Boîte de vitesses selon l'une quelconque des revendications 1 à 5, **caractérisée en ce que** le tube extérieur (14) est doté de plusieurs canaux (18, 20, 22) formés par des rainures ouvertes, qui communiquent avec des orifices d'alimentation (38, 40, 60) séparés et/ou des évidements (24, 26, 28) dans la bride (16).

7. Boîte de vitesses selon l'une quelconque des revendications 1 à 6, **caractérisée en ce que** le tube extérieur (14) s'élargit radialement vers l'extérieur côté bride au moins dans la zone des rainures ouvertes.

8. Boîte de vitesses selon l'une quelconque des revendications 1 à 7, **caractérisée en ce qu'**on prévoit trois canaux (18, 20, 22) formés par des rainures ouvertes dans le tube extérieur (14), qui débouchent dans les évidements (24, 26, 28) dans la bride (16) en étant répartis en forme d'étoile autour de la périphérie.

9. Boîte de vitesses selon l'une quelconque des revendications 1 à 8, **caractérisée en ce que** le tube intérieur (12) à symétrie de rotation dépasse du tube extérieur (14) au moins au niveau d'une face avant et est rendu étanche dans un orifice (36, 46) d'un composant adjacent (30, 48).

10. Boîte de vitesses selon la revendication 9, **caractérisée en ce qu'**un canal (22) réalisé dans le tube extérieur (14) est conçu de façon ouverte sur la face avant opposée à la bride (16).

11. Boîte de vitesses selon l'une quelconque des revendications 1 à 10, **caractérisée en ce que** le tube extérieur (14) est réalisé dans un procédé de coulée ou de forgeage.

12. Boîte de vitesses selon l'une quelconque des revendications 1 à 11, **caractérisée en ce que** les canaux (18, 20, 22) présentent des longueurs différentes (l₁, l₂, l₃) et **en ce que** les orifices d'alimentation radiaux (38, 40) sont à chaque fois prévus entre les bagues d'étanchéité (44) disposées sur le tube extérieur (14).

13. Boîte de vitesses selon la revendication 12, **caractérisée en ce que** les bagues d'étanchéité sont des segments de piston (44) ou des éléments d'étanchéité similaires insérés dans les rainures circulaires (42) du tube extérieur (14).

14. Boîte de vitesses selon l'une quelconque des revendications 1 à 13, **caractérisée en ce que** le conduit pour fluide est rattaché à une pièce rotative (30) de la boîte de vitesses pour véhicules à l'aide de la bride (16) et **en ce que** le tube extérieur (14) est inséré dans un orifice cylindrique (46) dans le carter (48) contigu de la boîte, des canaux d'alimentation et d'évacuation' (32, 50, 52, 60) communiquant avec les orifices d'alimentation radiaux (38, 40) et les évidements (24, 26, 28) dans la bride (16) étant prévus.

15. Boîte de vitesses selon la revendication 14, **caractérisée en ce que** le conduit pour fluide (10) est monté autour d'un arbre de transmission de la boîte et achemine de l'huile hydraulique du carter (48) à la pièce rotative (30) de la boîte entraînant la commande de changement de rapport.
